# FASCICULE DE BREVET EUROPEEN

(11) **EP 2 112 734 B1**
(45) Date de publication et mention de la délivrance du brevet: **01.12.2010**
(21) Numéro de dépôt: 09290302.0
(22) Date de dépôt: 24.04.2009
(51) Int. Cl.: H02G 3/14

(54) **Appareillage électrique à rapporter sur une boite d'encastrement**
Elektrogerät zum Aufsetzen auf ein Einbaugehäuse
Electrical device for being added to a recessed box

(30) Priorité: 25.04.2008 FR 0852818
(43) Date de publication de la demande: 28.10.2009
(73) Titulaire: Legrand France, 87000 Limoges (FR); Legrand SNC, 87000 Limoges (FR)
(72) Inventeur: Maziere, Laurent, 87000 Limoges (FR)
(74) Mandataire: Santarelli

(56) Documents cités:
- FR-A- 2 118 269
- US-A- 1 688 518

## Description

### DOMAINE DE L'INVENTION

L'invention concerne de manière générale les appareillages électriques à rapporter sur une boîte d'encastrement dans une cloison.

### ARRIERE-PLAN TECHNOLOGIQUE

On connaît déjà des appareillages électriques qui comportent un support de mécanisme d'appareillage électrique, un mécanisme monté sur le support, un adaptateur sur lequel viennent se fixer le support et le mécanisme, ainsi qu'une plaque formant enjoliveur rapportée sur l'adaptateur. L'adaptateur, qui reste disposé hors de la boîte contre la surface extérieure de la cloison, est fixé à la boîte par l'intermédiaire d'orifices en forme de trou de serrure qui seraient incurvés, que présente l'adaptateur et dans lesquels passent des têtes de vis de fixation. La plaque comporte du côté interne un renfoncement d'accueil de l'adaptateur et des têtes de vis afin que la périphérie de la plaque puisse venir en contact avec la surface de la cloison malgré la surépaisseur due à la présence de l'adaptateur et des têtes de vis. Les orifices en trou de serrure permettent de guider à ajustement angulaire la plaque et l'adaptateur, et par conséquent le support et le mécanisme, par rapport à ladite boîte. L'opérateur n'est donc pas contraint de fixer avec une grande précision la boîte par rapport à la cloison puisqu'il peut rattraper l'éventuel décalage angulaire par simple maniement de la plaque.

### OBJET DE L'INVENTION

L'invention vise à accroître les possibilités d'agencement de ce type d'appareillage électrique.

A cet effet, l'invention propose un appareillage électrique à rapporter sur une boîte d'encastrement dans une cloison, comportant un support de mécanisme d'appareillage électrique, un mécanisme d'appareillage électrique fixé audit support, un adaptateur et une plaque adaptée à être disposée contre la surface extérieure de ladite cloison, caractérisé en ce que ledit appareillage comporte en outre des moyens de fixation de ladite plaque audit support et des moyens de guidage à ajustement angulaire de ladite plaque par rapport audit adaptateur.

Comme la plaque, le support et le mécanisme peuvent être ajustés par rapport à l'adaptateur, il n'est pas utile que l'adaptateur puisse être ajusté angulairement par rapport à la boîte. En conséquence, et grâce à l'invention, il est possible de disposer l'adaptateur entièrement ou en grande partie à l'intérieur de la boîte.

Les éléments situés en saillie de la cloison ne comportent pas ou comportent seulement une petite partie de l'adaptateur, de sorte que l'importance de la saillie peut être particulièrement faible.

Selon des caractéristiques de mise en oeuvre particulièrement simples et commodes tant à la fabrication qu'à l'utilisation :
- lesdits moyens de guidage comporte un couple trou/vis de fixation, avec ladite vis de fixation qui s'étend transversalement à ladite plaque, au travers dudit trou et en prise avec ledit adaptateur, ledit trou présentant une forme allongée transversalement à ladite tige de la vis de fixation pour autoriser un mouvement relatif de ladite vis de fixation par rapport au pourtour dudit trou ;
- ledit adaptateur comporte un logement présentant une paroi supérieure, située face à ladite plaque, présentant ledit trou, ledit logement accueillant un écrou mobile à translation dans lequel est ménagé un filet avec lequel est en prise ladite vis de fixation ;
- ledit logement comporte en outre une paroi inférieure opposée à ladite paroi supérieure qui comporte un trou inférieur, identique audit trou, et permettant à ladite vis de fixation de traverser ledit logement de part en part ;
- ledit trou est ménagé dans ladite plaque, ledit adaptateur comporte un puits de vis et ladite vis de fixation est auto-taraudeuse ;
- ladite plaque présente un renfoncement de sa surface extérieure opposée audit adaptateur autour dudit trou, ledit renfoncement formant voie de cheminement de la tête de vis de fixation dans le mouvement relatif de celle-ci par rapport à ladite plaque ;
- ladite plaque présente un orifice circulaire sur le pourtour duquel s'étend un bord en retrait vers ledit adaptateur, ledit bord comportant ledit renfoncement ;
- l'appareillage comporte deux dits couples trou/vis de fixation;
- les deux dits couples sont disposés à l'opposé l'un de l'autre ;
- ladite plaque est plane ;
- lesdits moyens de fixation de ladite plaque audit support comportent plusieurs couples plot épaulé/orifice en trou de serrure, ladite plaque comportant lesdits plots épaulés tandis que ledit support comporte lesdits orifices en trou de serrure ;
- lesdits moyens de fixation de ladite plaque audit support comportent des goujons filetés, des écrous vissés sur l'extrémité libre desdits goujons et des orifices au travers desquels passent lesdits goujons filetés, lesdits goujons appartenant à ladite plaque tandis que ladite plaque présente lesdits orifices ;
- chaque dit trou est oblong ;
- ledit support présente une forme circulaire ;
- ledit support comporte un puits destiné à recevoir une fiche de courant et ledit mécanisme comporte des alvéoles chacune adaptée à recevoir l'une des broches de ladite fiche de courant et une broche de mise à la terre ;
- ladite plaque comporte en outre un volet rabattable disposé face audit puits dudit support.

L'invention propose également un ensemble comportant un appareillage tel que précédemment exposé et une boîte d'encastrement dans une cloison comportant un corps en matière plastique présentant une paroi latérale et un rebord transversal délimitant une ouverture, avec ledit adaptateur qui est monté entièrement dans ladite boîte, sur ladite paroi latérale au moyen de vis d'appareillage et est situé, dans ledit corps, vers ledit rebord.

Selon des caractéristiques de mise en oeuvre particulièrement simples et commodes tant à la fabrication qu'à l'utilisation :
- ledit support comporte une collerette plate disposée dans ledit corps ;
- ladite collerette présente un contour adapté à la surface intérieure de ladite paroi latérale ;
- ladite collerette présente une surface supérieure du côté de ladite ouverture, ladite surface supérieure affleurant au niveau dudit rebord ;
- ladite paroi latérale présente une portion en saillie vers l'intérieur dudit corps sur laquelle est fixé ledit adaptateur ;
- ladite portion en saillie délimite un renfoncement de la surface extérieure dans lequel est disposée une vis sur laquelle est prise une patte de fixation adaptée à prendre en sandwich ladite cloison en coopération avec ledit rebord dudit corps.

### BREVE DESCRIPTION DES DESSINS

Les caractéristiques et avantages de l'invention ressortiront de la description qui suit, donnée à titre d'exemple préféré, mais non limitatif, en référence aux dessins annexés, sur lesquels :
- la figure 1 est une vue éclatée d'un ensemble comportant un appareillage électrique et une boîte à encastrer ;

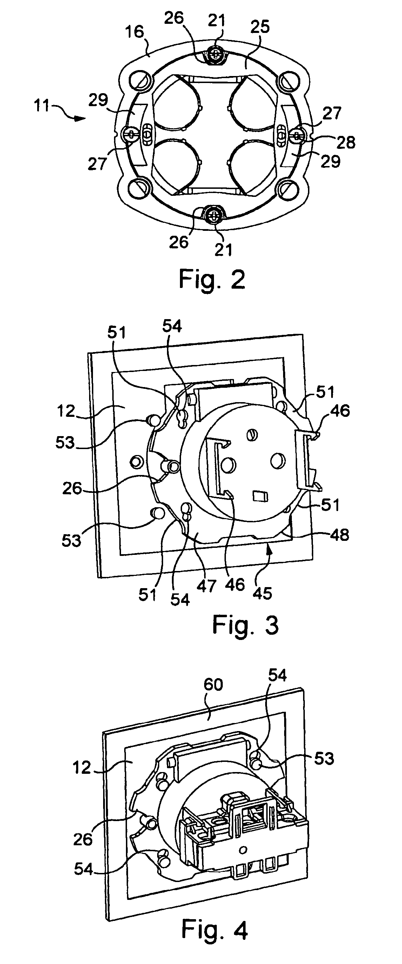

- la figure 2 est une vue en élévation du corps de boîte de la figure 1, sur lequel est fixé l'adaptateur ;
- la figure 3 est une vue en perspective de l'appareillage électrique sans le mécanisme ;
- la figure 4 est une vue en perspective de l'appareillage électrique ;

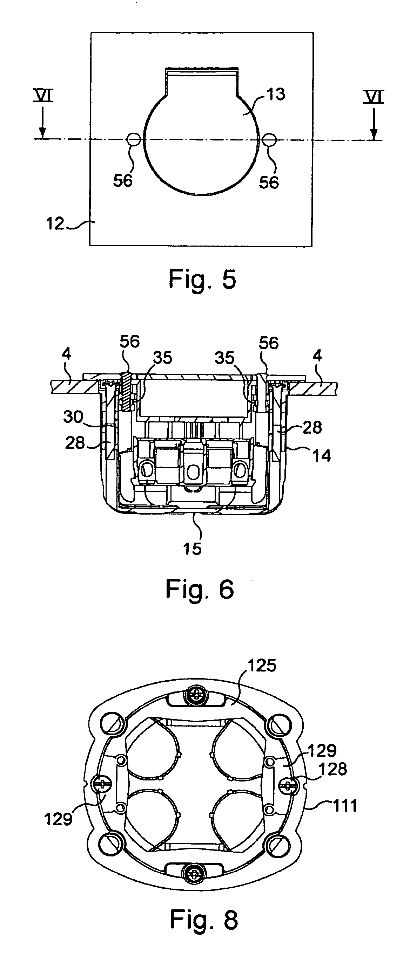

- la figure 5 est une vue en élévation de l'appareillage électrique de la figure 4 prise du côté de la plaque ;
- la figure 6 est une vue en coupe de l'ensemble de la figure 1, monté, prise selon le plan repéré par VI-VI repéré sur la figure 5 ;

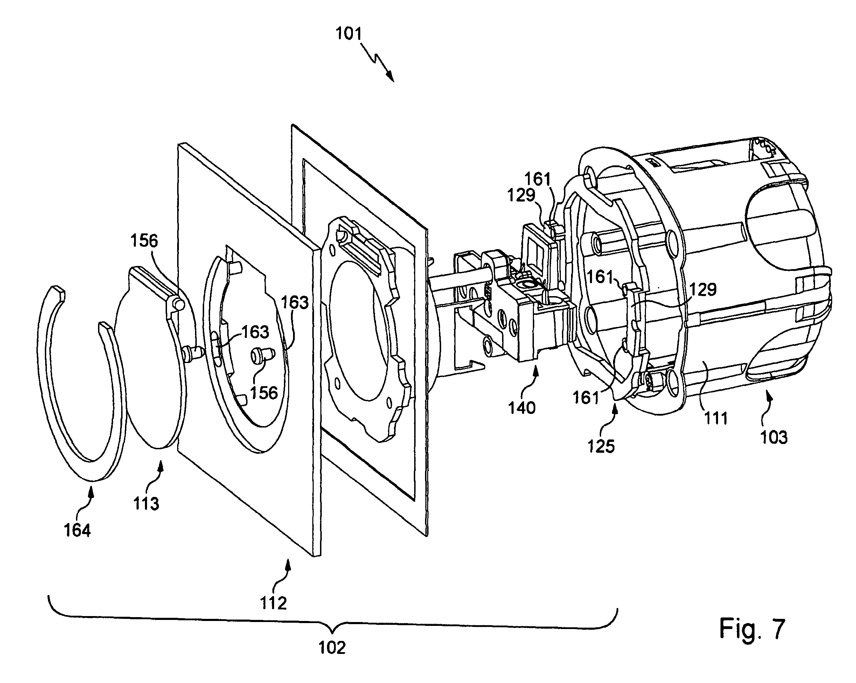

- la figure 7 est une vue éclatée d'un ensemble selon un deuxième mode de réalisation ;
- la figure 8 est une vue en élévation du corps de boîte de la figure 7 sur lequel est fixé l'adaptateur ;

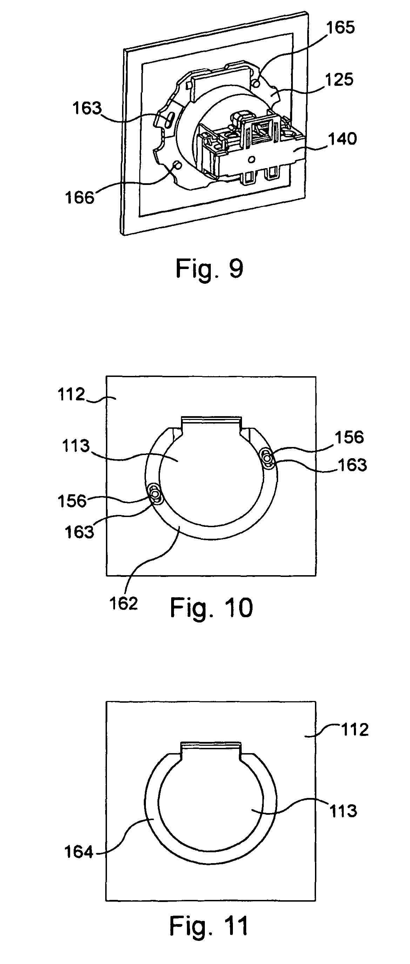

- la figure 9 est une vue en perspective de l'appareillage électrique de la figure 7 ;
- la figure 10 est une vue en élévation de l'appareillage électrique de la figure 7 prise du côté de la plaque sans le cache prévu autour du volet ; et
- la figure 11 est une vue similaire à celle de la figure 10 avec le cache en position.

### DESCRIPTION DETAILLEE D'UN EXEMPLE DE REALISATION

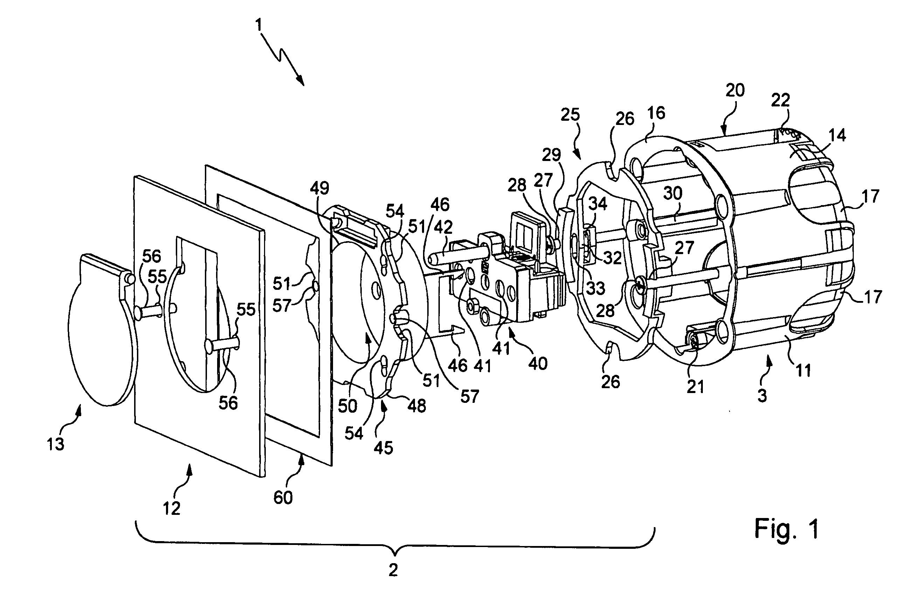

L'ensemble 1 illustré sur la figure 1 comporte un appareillage électrique 2 et une boîte 3 classique à encastrer dans une cloison 4 présentant un corps 11. Dans le mode de réalisation représenté, l'appareillage 2 est une prise de courant qui comporte une plaque 12 formant enjoliveur. La plaque 12 comporte un volet 13 monté à rotation par rapport au reste de la plaque 12.

Le corps 11 est ici en matière plastique moulée et la plaque 12 et son volet 13 sont ici métalliques.

Le corps 11 comporte une paroi latérale 14 de forme globalement cylindrique, un fond 15 et une ouverture frontale opposée au fond 15 et bordée d'un rebord 16 en forme de collerette. Ce rebord 16 s'étend transversalement à la paroi latérale 14 de façon à former un bord en saillie vers l'extérieur. Le rebord 16 est fin et déborde peu de la paroi latérale 14.

La paroi latérale 14 et le fond 15 présentent ici des parties défonçables 17 permettant, après enlèvement de ces parties défonçables 17, la mise en place de conducteurs d'arrivée et de départ à relier au mécanisme électrique accueilli dans le corps 11. Les parties défonçables 17 sont au nombre de quatre, disposées vers le fond 15 et réparties régulièrement sur la paroi latérale 14.

Chaque partie défonçable 17 est reliée par une ou plusieurs zones sécables au corps 11. Les zones sécables sont en matière plastique, les parties défonçables 17 et le corps 11 étant moulés d'une pièce.

La paroi 14 comporte sur sa surface extérieure deux renfoncements 20 diamétralement opposés.

Chaque renfoncement 20 s'étend selon une direction axiale qui correspond à la direction des génératrices de la paroi 14. Chaque renfoncement 20 s'étend à partir du rebord 16 en direction du fond 15. Vers le fond 15, le renfoncement 20 est plus profond que vers le rebord 16. La surface supérieure de chaque renfoncement 20 comporte un orifice circulaire adapté au passage d'une tige de vis 21. Au-dessus de cet orifice, il est prévu un petit logement circulaire permettant d'accueillir la tête de la vis 21. Une fois que la tige de la vis 21 est passée dans l'orifice et est accueillie dans le renfoncement 20 et que la tête est positionnée dans son logement circulaire, la vis 21 est bloquée selon la direction axiale mais est toujours libre de pivoter sur elle-même.

Chaque vis 21 est en prise avec une patte de fixation 22 mobile à translation selon la direction axiale. En effet, chaque patte 22 comporte un trou taraudé correspondant au filet de la tige de la vis 21 et les dimensions du logement bloquent la patte 22 à rotation lorsque l'on fait tourner la vis 21 au moyen d'un tournevis. Ainsi lorsque l'on fait tourner la vis 21 la patte 22 est entraînée à translation selon la direction axiale vers le rebord 16 ou vers le fond 15 suivant le sens de rotation de la vis 21. Comme le renfoncement 20 est moins profond du côté du rebord 16, la patte 22, lorsqu'elle est du côté du rebord 16 est plus en saillie que lorsqu'elle est du côté du fond 15 de sorte que la cloison dans laquelle est encastrée la boîte 3 est prise en sandwich entre le rebord 16 et les pattes 22 de manière connue en soi.

L'appareillage 2 comporte également un adaptateur 25. Cet adaptateur 25, en plastique moulé, présente une forme annulaire et plate dont le bord extérieur est globalement circulaire et s'adapte à la forme de la surface intérieure de la paroi latérale 14 du côté du rebord 16 et de l'ouverture du corps 11. Le bord intérieur de l'adaptateur 25 présente ici une forme globalement carrée de façon à définir le pourtour d'une ouverture donnant l'accès au volume intérieur au corps 11.

Comme le bord extérieur épouse au mieux le relief de la surface intérieure du corps 11, l'adaptateur 25 ne saille que peu vers l'intérieur et son bord intérieur définit une ouverture de dimension suffisante.

L'adaptateur 25 est disposé contre les surfaces supérieures des renfoncements 20, c'est-à-dire les surfaces qui regardent vers le plan contenant le rebord 16, des découpes 26, diamétralement opposées, étant prévues à l'emplacement des vis 21.

L'adaptateur 25 comporte une seconde série d'encoches 27, diamétralement opposé. Les encoches 27 et les découpes 26 sont disposées alternées et régulièrement réparties sur la périphérie de l'adaptateur 25. Les encoches 27 sont semi-circulaires et permettent le passage de tiges de vis d'appareillage 28. Les encoches 27 sont réalisées sur une saillie parallélépipédique 29 dont la surface supérieure est plus proche du plan comportant le rebord 16 que ne l'est le reste de l'adaptateur 25. La saillie parallélépipédique 29 définit un renfoncement sur la surface inférieure de l'adaptateur 25. Ce renfoncement forme un logement qui vient accueillir une extrémité d'un puits 30 de vis d'appareillage 28 prévue sur la surface intérieure de la paroi latérale 14 du corps 11. Ainsi, pour le montage de l'adaptateur 25 sur le corps 11, on positionne l'adaptateur 25 contre les renfoncements 20 et contre les puits de vis 30 et on enfonce la vis 28 dans le puits de vis 30 jusqu'à ce que la tête de vis 28 vienne contre la surface supérieure de la saillie 29.

Du côté du bord intérieur de l'adaptateur 25, celui-ci comporte un logement 32 également parallélépipédique mais qui ici fait saillie vers le fond 15. Le logement 32 présente des dimensions qui correspondent à peu près à celles de la saillie 29. Le logement 32 est ouvert sur trois de ses côtés. Ainsi la surface du logement 32 qui se confond avec la surface principale de l'adaptateur 25 présente un trou oblong 33 tandis que la surface du logement 32 disposée à l'opposé comporte elle aussi un trou oblong 34 identique au trou oblong 33. La surface du logement 32 située sur le bord intérieur de l'adaptateur 25 est également ouverte.

Le logement 32 accueille un écrou 35 dont le contour extérieur présente une largeur correspondant sensiblement à la largeur du logement 32 ; la longueur du logement 32 est elle sensiblement le double de la largeur du logement 32 de sorte que l'écrou 35 est mobile à translation selon la direction longitudinale du logement 32 et donc des trous oblong 33, 34. Les dimensions des trous oblongs 33, 34 sont telles que la partie centrale de l'écrou 35 est complètement dégagée quelque soit la position de l'écrou 35 dans le logement 32. L'écrou 35 comporte une surface intérieure taraudée adaptée au passage d'une vis.

L'appareillage 2 comporte en outre un mécanisme qui est ici un moteur de prise 40. Un tel moteur 40 ne relevant pas directement de la présente invention, il ne sera pas décrit en détail. Le moteur 40 comporte deux pièces de contact de type femelle ou alvéole 41. Chaque alvéole 41 est adaptée à recevoir l'une des broches d'une fiche de courant complémentaire. Le moteur 40 comporte en outre une broche de mise à la terre 42 qui fait saillie du moteur 40. Le moteur 40 est fixé à un support de mécanisme 45 à l'aide de pattes d'encliquetage 46.

Le support 45 comporte une collerette 47 présentant un bord extérieur 48 et un bord intérieur 49. Le bord intérieur 49 est circulaire et définit l'entrée d'un puits cylindrique 50 destiné à recevoir une fiche de courant. Le puits 50 comporte un fond présentant deux orifices qui se superposent aux alvéoles 41 ainsi qu'un troisième orifice traversé par la broche 42.

Le bord extérieur 48 présente plusieurs découpes 51 qui permettent le positionnement d'éléments en saillie vers l'intérieur de la surface intérieure du corps 11 ainsi que des têtes de vis d'appareillage 28. Ces découpes 51 sont plus larges que les saillies correspondantes ou que les têtes de vis d'appareillage 28 de sorte que la collerette 47 et donc le support 45 peut effectuer une légère course en rotation autour de son axe principal (axe qui se confond avec l'axe de la surface cylindrique du puits 50).

Pour la fixation du support 45 à la plaque 12, la plaque 12 comporte ici quatre plots épaulés 53 disposés en carré et faisant saillie du côté de la plaque 12 qui regarde vers le corps de prise 11. La collerette 47 comporte, elle, quatre orifices en trou de serrure 54 également disposés en carré.

Les plots 53 comportent chacun un pied et une tête, pied et tête présentant des formes cylindriques avec la tête qui présente un diamètre plus important que le pied.

Les orifices en trou de serrure 54 présentent une première portion dont le diamètre correspond au diamètre de la tête des plots 53 tandis que la seconde portion présente un diamètre qui correspond au diamètre des pieds des plots 53.

Pour le montage du support 45 sur la plaque 12, on approche le support 45 de la plaque 12 avec les premières portions des quatre orifices 54 en face des plots 53. Lorsque les plots 53 sont disposés au travers de ces portions et donc que la collerette 47 est disposée contre la surface de la plaque 12, on déplace à translation le support 45 par rapport à la plaque 12 de sorte que les plots 53 viennent s'emboîter dans les deuxièmes portions.

Le volet 13 est monté pivotant par rapport au reste de la plaque 12 entre une position ouverte et une position fermée. Il est disposé par rapport au reste de la plaque 12 face au puits 50 de sorte que lorsque le volet 13 a pivoté en position ouverte, il dégage une ouverture vers le puits 50 pour l'insertion de la fiche de courant. Le volet 13 peut comporter un système d'ouverture ou de fermeture à ressort de façon à passer automatiquement en position ouverte ou en position fermée. Il peut également être pourvu d'un système de type push-push pour le libérer à partir de sa position fermée.

De part et d'autre du volet 13 et à une distance qui correspond à la distance séparant les deux logements 32, la plaque 12 comporte deux orifices 55 adaptés au passage de vis de fixation 56. Dans le prolongement des orifices 55, le support 45 comporte des puits de vis 57 ouverts de part en part et pourvus d'une surface intérieure lisse. Lorsque l'ensemble 1 est monté, les vis 56 traversent donc les orifices 55 et les puits de vis 57 du support 45, traversent les trous oblong 33 et viennent en prise dans les écrous 35. Suivant la longueur de la tige des vis 56 l'extrémité des vis 56 opposées à la tête peut également traverser les trous oblong 34.

Ces vis de fixation 56 permettent de fixer le bloc formé de la plaque 12, du support 45 et du moteur 40 à l'adaptateur 25 selon la direction axiale de la boîte 3 qui correspond également à la direction principale des tiges des vis 56 grâce aux orifices 55 et aux surfaces taraudées des écrous 35. Le bloc est également fixé selon cette même direction par rapport au corps 11 puisque l'adaptateur 25 est lui-même fixé au moyen des vis d'appareillage 28 sur le corps 11.

En revanche, l'ensemble n'est pas fixe à rotation par rapport à l'axe principal de la boîte 3 (transversal au fond 15) puisque les écrous 35 sont libres de se déplacer dans les logements 32 et que la collerette 47 est adaptée à effectuer un léger ajustement angulaire autour de l'axe de la boîte. Le pivotement résultant pour la plaque 12 est de faible amplitude. Les écrous ont un mouvement de rotation avec un grand rayon de courbure par rapport à leur course. Les trous 33 sont ici légèrement incurvés.

L'ensemble 1 est ici pourvu en outre d'un joint rectangulaire 60 adapté à être positionné entre la plaque 12 et la surface extérieure de la cloison.

Lorsque l'on monte l'ensemble 1, en premier lieu, on encastre classiquement le corps 11 dans une cloison 4 murale ou de sol.

Lors de cette fixation, il n'est pas sûr que l'opérateur ait pu positionner le corps 11 parfaitement d'aplomb. On vient fixer l'adaptateur 25 ici entièrement dans le corps 11 de boîte 3 (dans une variante non illustrée, l'adaptateur est disposée en grande partie dans le corps de boîte) pour ensuite positionner le bloc formé de la plaque 12, du support 45 et du moteur 40 (en ayant placé le joint 60), par vissage des vis de fixation 56. On peut alors ajuster angulairement la plaque 12 dans le cas où elle ne serait pas parfaitement d'aplomb.

Grâce à l'ensemble selon l'invention, et notamment grâce au positionnement de l'adaptateur 25 et à l'absence de surépaisseur due aux moyens utilisés pour rendre ajustable angulairement la plaque formant enjoliveur, il possible d'obtenir un rattrapage d'aplomb sur un ensemble de très faible saillie. Par ailleurs, l'épaisseur de l'interstice entre la surface extérieure de la cloison et les bords (ici rectangulaires) de la plaque 12 est limitée à l'épaisseur du rebord du corps de boîte ou à l'épaisseur du joint (si l'on utilise un joint et s'il est plus épais que le rebord). Ainsi il est difficile voire impossible de glisser un objet, par exemple de type lame, entre la plaque et la cloison, ce qui améliore la sécurité de l'utilisateur.

On décrit maintenant un deuxième mode de réalisation de l'invention pour lequel on a gardé pour les éléments communs les mêmes références numériques augmentées de 100.

L'ensemble 101 comporte un appareillage 102 et une boîte 103 classique. Cette boîte 103 comporte un corps 111. La plaque 112 est pourvue d'un volet 113. Au corps 111 est fixé un adaptateur 125 tandis qu'un moteur 140 est fixé sur un support 145 lui-même fixé sur la plaque 112.

L'adaptateur 125 présente une saillie parallélépipédique 129 qui s'étend sur une distance plus importante que ne s'étend la saillie 29 de l'adaptateur 25. A chaque extrémité de la saillie 129 est prévu un puits de vis 161 destiné à accueillir une vis auto-taraudeuse.

Les puits de vis de fixation 161 sont situés de part et d'autre des vis d'appareillage (non représentées), chacun à égale distance de la vis d'appareillage de sorte qu'il existe deux couples de puits de vis de fixation 161 diamétralement opposés.

La plaque 112 présente sur le pourtour de l'ouverture quasi circulaire obturable par le volet 113, un bord annulaire 162. La surface extérieure du bord 162 est située dans un plan qui est légèrement en retrait par rapport au plan qui comporte la surface extérieure de la plaque 112 (à l'opposé du support 145). Le bord annulaire 162 est pourvu de deux trous oblong 163 diamétralement opposés. Chaque trou oblong présente une largeur correspondant au diamètre de la tige des vis de fixation 156 et est ici légèrement incurvé.

Du côté extérieur, les trous oblongs 163 sont plus larges de sorte qu'il existe dans le bord annulaire 162 un renfoncement oblong dont la surface de fond vient accueillir la tête de vis 156. Cette surface de fond sert de voie de cheminement de la tête de vis 156 dans un mouvement relatif à de la vis 156 par rapport à la plaque 112. La profondeur du renfoncement est sensiblement équivalente à l'épaisseur d'une tête de vis de fixation 156.

La surface extérieure du volet 113 étant située dans le même plan que la surface extérieure du reste de la plaque 112, il est prévu un cache 164 dont la forme correspond à celle du bord annulaire 162 pour venir combler le renfoncement défini par ce bord 162.

Le support 145 est fixé à la plaque 112 au moyen de goujons filetés 165 appartenant à la plaque 112 et d'orifices 166 correspondants appartenant au support 145. Des écrous (non représentés) sont vissés sur l'extrémité libre des goujons 165 traversant les orifices 166.

Lorsque le corps 111 est encastré dans la cloison on peut y insérer le moteur 140 fixé au support 145 lui-même fixé à la plaque 112.

On positionne la plaque 112 de sorte que les trous oblong 163 diamétralement opposés se trouvent en vis-à-vis d'un des deux couples de puits de vis de fixation 161 de telle sorte que la plaque 112 soit orientée le plus aplomb possible. On fixe alors la plaque 112 en vissant les vis 156 jusqu'à ce que la tête de chaque vis 156 vienne contre la surface inférieure du renfoncement formant voie de cheminement pour tête de vis de fixation 156.

On peut ensuite ajuster angulairement la plaque 112 autour de l'axe principal de la prise 110 de façon à rattraper un possible décalage dans l'aplomb de la plaque 112.

Un dernier tour de vissage des vis 156 permet de bloquer la position de la plaque 112 par rapport à l'adaptateur 125.

Dans une variante non illustrée, les trous 163 dans la plaque 112 présentent une extrémité en forme de trou de serrure de sorte que l'on positionne les vis 156 dans les puits de fixation 161 puis on approche la plaque 112 avec les portions de plus grand diamètre face aux têtes de vis jusqu'au contact de la plaque 112 avec la cloison. Puis on pivote la plaque de la même façon que précédemment. Une fois la plaque d'aplomb, on peut opérer un vissage final.

Dans d'autres mode de réalisation non représentés, l'adaptateur selon l'invention est installé dans différentes sortes de boîtes à encastrer dans une cloison, que ce soit des boîtes dont le corps est circulaire ou carré, que ces boîtes possèdent un fond ou n'en possèdent pas ou encore la boîte est encastrée dans une paroi dure et à sceller avec un produit de scellement ajouté. L'appareillage selon l'invention est donc avantageusement rapporté dans des boîtes classiques.

Dans d'autres modes de réalisation non représentés, les trous 33, 34, 163 ne sont pas oblongs. Ils présentent par exemple à la place des portions semi-circulaires, des portions droites.

Dans d'autres modes de réalisation non représentés, la plaque et/ou le volet sont en matière plastique moulée et/ou le corps est métallique.

Dans d'autres modes de réalisation non représentés, le mécanisme n'est pas un moteur de prise. Il s'agit par exemple d'un mécanisme d'interrupteur. Et la plaque formant enjoliveur ne présente pas de volet.

La présente invention n'est pas limitée aux modes de réalisation décrits et représentés mais englobe toute variante d'exécution.

## Revendications

1. Appareillage électrique à rapporter sur une boîte d'encastrement (3 ; 103) dans une cloison (4), comportant un support (45 ; 145) de mécanisme d'appareillage électrique, un mécanisme d'appareillage électrique (40 ; 140) fixé audit support (45 ; 145), un adaptateur (25 ; 125) et une plaque (12 ; 112) adaptée à être disposée contre la surface extérieure de ladite cloison (4), **caractérisé en ce que** ledit appareillage comporte en outre des moyens de fixation (53, 54 ; 165, 166) de ladite plaque (12 ; 112) audit support (45 ; 145) et des moyens de guidage à ajustement angulaire (32, 33, 34, 35, 55, 56, 57; 156, 161, 163) de ladite plaque (12 ; 112) par rapport audit adaptateur (25 ; 125).

2. Appareillage électrique selon la revendication 1, **caractérisé en ce que** lesdits moyens de guidage comportent un couple trou/vis de fixation (33, 56 ; 163, 156), avec ladite vis de fixation (56 ; 156) qui s'étend transversalement à ladite plaque (12 ; 112), au travers dudit trou (33 ; 163) et en prise avec ledit adaptateur (25 ; 125), ledit trou (33 ; 163) présentant une forme allongée transversalement à ladite tige de la vis de fixation (56 ; 156) pour autoriser un mouvement relatif de ladite vis de fixation (56 ;156) par rapport au pourtour dudit trou (33 ;163).

3. Appareillage selon la revendication 2, **caractérisé en ce que** ledit adaptateur (25) comporte un logement (32) présentant une paroi supérieure, située face à ladite plaque (12), présentant ledit trou (33), ledit logement accueillant un écrou (35) mobile à translation dans lequel est ménagé un filet avec lequel est en prise ladite vis de fixation (56).

4. Appareillage selon la revendication 3, **caractérisé en ce que** ledit logement (32) comporte en outre une paroi inférieure opposée à ladite paroi supérieure qui comporte un trou inférieur (34), identique audit trou (33), et permettant à ladite vis de fixation (56) de traverser ledit logement (32) de part en part.

5. Appareillage selon la revendication 2, **caractérisé en ce que** ledit trou (163) est ménagé dans ladite plaque (112) et ledit adaptateur (125) comporte un puits de vis (161) et ladite vis de fixation (156) est auto-taraudeuse.

6. Appareillage selon la revendication 5, **caractérisé en ce que** ladite plaque (112) présente un renfoncement de sa surface extérieure opposée audit adaptateur (125) autour dudit trou (161), ledit renfoncement formant voie de cheminement de la tête de vis de fixation (156) dans le mouvement relatif de celle-ci par rapport à ladite plaque (112).

7. Appareillage selon la revendication 6, **caractérisé en ce que** ladite plaque (112) présente un orifice circulaire sur le pourtour duquel s'étend un bord (162) en retrait vers ledit adaptateur (125), ledit bord (162) comportant ledit renfoncement.

8. Appareillage selon l'une quelconque des revendications 2 à 7, **caractérisé en ce qu'**il comporte deux dits couples trou (33 ; 163)/vis de fixation (56 ; 156).

9. Appareillage selon la revendication 8, **caractérisé en ce que** les deux dits couples sont disposés à l'opposé l'un de l'autre.

10. Appareillage selon l'une quelconque des revendications 1 à 9, **caractérisé en ce que** ladite plaque (12 ; 112) est plane.

11. Appareillage selon l'une quelconque des revendications 1 à 10, **caractérisé en ce que** lesdits moyens de fixation de ladite plaque (12) audit support (45) comportent plusieurs couples plot épaulé/orifice en trou de serrure, ladite plaque (12) comportant lesdits plots épaulés (53) tandis que ledit support (45) comporte lesdits orifices en trou de serrure (54).

12. Appareillage selon l'une quelconque des revendications 1 à 10, **caractérisé en ce que** lesdits moyens de fixation de ladite plaque (112) audit support (145) com portent des goujons filetés (165), des écrous vissés sur l'extrémité libre desdits goujons (165) et des orifices (166) au travers desquels passent lesdits goujons filetés (165), lesdits goujons (165) appartenant à ladite plaque (112) tandis que ladite plaque (112) présente lesdits orifices (166).

13. Appareillage selon l'une quelconque des revendications 1 à 12, **caractérisé en ce que** chaque dit trou (33 ; 163) est oblong.

14. Appareillage selon l'une quelconque des revendications précédentes, **caractérisé en ce que** ledit support (45 ; 145) présente une forme circulaire.

15. Appareillage selon l'une quelconque des revendications précédentes, **caractérisé en ce que** ledit support (45 ; 145) comporte un puits (50) destiné à recevoir une fiche de courant et ledit mécanisme (40 ; 140) comporte des alvéoles (41) chacune adaptée à recevoir l'une des broches de ladite fiche de courant et une broche de mise à la terre (42).

16. Appareillage selon la revendication 15, **caractérisé en ce que** ladite plaque (12 ; 112) comporte en outre un volet (13 ; 113) rabattable disposé face audit puits (50) dudit support (45 ; 145).

17. Ensemble comportant un appareillage selon l'une quelconque des revendications précédentes et une boîte d'encastrement (3 ; 103) dans une cloison (4) comportant un corps (11 ; 111) en matière plastique présentant une paroi latérale (14) et un rebord transversal (16) délimitant une ouverture, avec ledit adaptateur (25 ; 125) qui est monté entièrement dans ladite boîte (3 ; 103), sur ladite paroi latérale (14) au moyen de vis d'appareillage (28) et est situé, dans ledit corps, vers ledit rebord (16).

18. Ensemble selon la revendication 17, **caractérisé en ce que** ledit support (45 ; 145) comporte une collerette (47) plate disposée dans ledit corps.

19. Ensemble selon la revendication 18, **caractérisé en ce que** ladite collerette (47) présente un contour adapté à la surface intérieure de ladite paroi latérale (14).

20. Ensemble selon la revendication 19, **caractérisé en ce que** ladite collerette (47) présente une surface supérieure du côté de ladite ouverture, ladite surface supérieure affleurant au niveau dudit rebord (16).

21. Ensemble selon l'une quelconque des revendications 17 à 20, **caractérisé en ce que** ladite paroi latérale (14) présente une portion en saillie vers l'intérieur dudit corps sur laquelle est fixé ledit adaptateur (25 ; 125).

22. Ensemble selon la revendication 21, **caractérisé en ce que** ladite portion en saillie délimite un renfoncement (20) de la surface extérieure dans lequel est disposée une vis (21) sur laquelle est prise une patte de fixation (22) adaptée à prendre en sandwich ladite cloison en coopération avec ledit rebord (16) dudit corps.

## Claims

1. Electrical apparatus to be fitted to a flush-mounting housing (3; 103) in a partition (4), comprising an electrical apparatus mechanism support (45; 145), an electrical apparatus mechanism (40; 140) fixed to said support (45; 145), an adaptor (25; 125) and a plate (12; 112) adapted to be disposed against the outside surface of said partition (4), **characterised in that** said apparatus further comprises means (53, 54; 165, 166) for fixing said plate (12; 112) to said support (45; 145) and guide means (32, 33, 34, 35, 55, 56, 57; 156, 161, 163) involving angular adjustment for said plate (12; 112) with respect to said adaptor (25; 125).

2. Electrical apparatus according to claim 1, **characterised in that** said guide means comprise a hole/fixing screw (33, 56; 163, 156) pair, with said fixing screw (56; 156) which extends transversely relative to said plate (12; 112) through said hole (33; 163) and into engagement with said adaptor (25; 125), said hole (33; 163) being of an elongate shape transversely with respect to said shank of the fixing screw (56; 156) to allow relative movement of said fixing screw (56; 156) with respect to the periphery of said hole (33; 163).

3. Apparatus according to claim 2, **characterised in that** said adaptor (25) comprises an accommodating means (32) having an upper wall disposed facing said plate (12) having said hole (33), said accommodating means receiving a nut (35) movable in translation, in which there is provided a thread with which said fixing screw (56) is in engagement.

4. Apparatus according to claim 3, **characterised in that** said accommodating means (32) further comprises a lower wall opposite to said upper wall which comprises a lower hole (34) identical to said hole (33) and permitting said fixing screw (56) to pass through said accommodating means (32) from one side to the other.

5. Apparatus according to claim 2, **characterised in that** said hole (163) is provided in said plate (112) and said adaptor (125) comprises a screw bore (161) and said fixing screw (156) is self-tapping.

6. Apparatus according to claim 5, **characterised in that** said plate (112) has a reinforcement at its outside surface opposite to said adaptor (125) around said hole (161), said reinforcement forming a guide movement path for the fixing screw head (156) in the relative movement thereof with respect to said plate (112).

7. Apparatus according to claim 6, **characterised in that** said plate (112) has a circular orifice, on the periphery of which extends a rim (162) in set-back relationship towards said adaptor (125), said rim (162) comprising said reinforcement.

8. Apparatus according to any one of claims 2 to 7, **characterised in that** it comprises two said hole (33; 163)/fixing screw (56; 156) pairs.

9. Apparatus according to claim 8, **characterised in that** said two pairs are disposed in mutually opposite relationship.

10. Apparatus according to any one of claims 1 to 9, **characterised in that** said plate (12; 112) is flat.

11. Apparatus according to any one of claims 1 to 10, **characterised in that** said means for fixing said plate (12) to said support (45) comprise a plurality of shouldered stud/keyhole-shaped orifice pairs, said plate (12) comprising said shouldered studs (53) while said support (45) comprises said keyhole-shaped orifices (54).

12. Apparatus according to any one of claims 1 to 10, **characterised in that** said means for fixing said plate (112) to said support (145) comprise threaded pins (165), nuts screwed on the free end of said pins (165) and orifices (166) through which said threaded pins (165) pass, said pins (165) belonging to said plate (112) while said plate (112) has said orifices (166).

13. Apparatus according to any one of claims 1 to 12, **characterised in that** each said hole (33; 163) is oblong.

14. Apparatus according to any one of the preceding claims, **characterised in that** said support (45; 145) is of a circular shape.

15. Apparatus according to any one of the preceding claims, **characterised in that** said support (45; 145) comprises an opening (50) intended to receive a current plug and said mechanism (40; 140) comprises sockets (41) each adapted to receive one of the pins of said current plug and an earth pin (42).

16. Apparatus according to claim 15, **characterised in that** said plate (12; 112) further comprises a shutter (13; 113) which can be folded back and which is disposed facing said opening (50) in said support (45; 145).

17. An assembly comprising an apparatus according to any one of the preceding claims and a flush-mounting housing (3; 103) in a partition (4) comprising a body (11; 111) of plastic material and having a side wall (14) and a transverse rim (16) delimiting an opening, with said adaptor (25; 125) which is mounted entirely in said housing (3; 103) on said side wall (14) by means of apparatus screws (28) and is disposed in said body towards said rim (16).

18. An assembly according to claim 17, **characterised in that** said support (45; 145) comprises a flat flange portion (47) disposed in said body.

19. An assembly according to claim 18, **characterised in that** said flange portion (47) is of a contour adapted to the inside surface of said side wall (14).

20. An assembly according to claim 19, **characterised in that** said flange portion (47) has an upper surface on the side of said opening, said upper surface being flush with the level of said rim (16).

21. An assembly according to any one of claims 17 to 20, **characterised in that** said side wall (14) has a projecting portion towards the interior of said body, on which said adaptor (25; 125) is fixed.

22. An assembly according to claim 21, **characterised in that** said projecting portion delimits a recess (20) of the outside surface, in which is disposed a screw (21) on which there is engaged a fixing lug (22) adapted to receive said partition in sandwich relationship in co-operation with said rim (16) of said body.

## Patentansprüche

1. Elektro-Installationsgerät, auf eine Unterputzdose (3; 103) in einer Wand (4) aufsetzbar, mit einem Halteteil (45; 145) für eine Installationsgeräteeinrichtung, einer an dem Halteteil (45; 145) befestigten Installationsgeräteeinrichtung (40; 140), einem Adapter (25; 125) und einer Platte (12; 112), die gegen die Außenfläche der Wand (4) angeordnet zu werden vermag,
**dadurch gekennzeichnet, dass** das I nstallationsgerät ferner Mittel (53, 54; 165, 166) zum Befestigen der Platte (12; 112) an dem Halteteil (45; 145) und Mittel (32, 33, 34, 35, 55, 56, 57; 156, 161, 163) zur winkelverstellbaren Führung der Platte (12; 112) bezüglich des Adapters (25; 125) umfasst.

2. Elektro-Installationsgerät nach Anspruch 1,
**dadurch gekennzeichnet, dass** die Führungsmittel ein aus Loch und Befestigungsschraube (33, 56; 163, 156) bestehendes Paar umfasst, wobei sich die Befestigungsschraube (56; 156) quer zur Platte (12; 112) durch das Loch (33; 163) hindurch und in Eingriff mit dem Adapter (25; 125) erstreckt, wobei das Loch (33; 163) eine längliche Form quer zum Schaft der Befestigungsschraube (56; 156) aufweist, um eine Relativbewegung der Befestigungsschraube (56; 156) bezüglich des Rands des Lochs (33; 163) zu gestatten.

3. Installationsgerät nach Anspruch 2,
**dadurch gekennzeichnet, dass** der Adapter (25) eine Aufnahme (32) mit einer der Platte (12) gegenüberliegenden oberen Wand aufweist, in der sich das Loch (33) befindet, wobei die Aufnahme eine translatorisch bewegliche Mutter (35) aufnimmt, in der ein Gewinde ausgebildet ist, mit dem die Befestigungsschraube (56) in Eingriff ist.

4. Installationsgerät nach Anspruch 3,
**dadurch gekennzeichnet, dass** die Aufnahme (32) ferner eine der oberen Wand entgegengesetzte untere Wand aufweist, die ein mit dem Loch (33) übereinstimmendes unteres Loch (34) aufweist, das der Befestigungsschraube (56) ermöglicht, die Aufnahme (32) vollständig zu durchqueren.

5. Installationsgerät nach Anspruch 2,
**dadurch gekennzeichnet, dass** das Loch (163) in der Platte (112) ausgebildet ist und der Adapter (125) einen Schraubenkanal (161) aufweist und die Befestigungsschraube (156) selbstgewindend ist.

6. Installationsgerät nach Anspruch 5,
**dadurch gekennzeichnet, dass** die Platte (112) eine Vertiefung in ihrer dem Adapter (125) entgegengesetzt angeordneten Außenseite um das Loch (161) herum aufweist, wobei die Vertiefung einen Führungsweg für den Kopf der Befestigungsschraube (156) bei deren Relativbewegung bezüglich der Platte (112) bildet.

7. Installationsgerät nach Anspruch 6,
**dadurch gekennzeichnet, dass** die Platte (112) eine runde Öffnung aufweist, an deren Umrandung sich ein zum Adapater (125) hin zurückversetzter Rand (162) erstreckt, wobei der Rand (162) die Vertiefung aufweist.

8. Installationsgerät nach einem der Ansprüche 2 bis 7,
**dadurch gekennzeichnet, dass** es zwei der aus Loch (33; 163) und Befestigungsschraube (56; 156) bestehenden Paare aufweist.

9. Installationsgerät nach Anspruch 8,
**dadurch gekennzeichnet, dass** diese beiden Paare einander entgegengesetzt angeordnet sind.

10. I nstallationsgerät nach einem der Ansprüche 1 bis 9,
**dadurch gekennzeichnet, dass** die Platte (12; 112) eben ist.

11. Installationsgerät nach einem der Ansprüche 1 bis 10,
**dadurch gekennzeichnet, dass** die Mittel zum Befestigen der Platte (12) an dem Halteteil (45) mehrere aus einem absatzbildenden Stift und einer schlüssellochartigen Öffnung bestehende Paare aufweisen, wobei die Platte (12) die absatzbildenden Stifte (53) aufweist, während das Halteteil (45) die schlüssellochartigen Öffnungen (54) aufweist.

12. Installationsgerät nach einem der Ansprüche 1 bis 10,
**dadurch gekennzeichnet, dass** die Mittel zum Befestigen der Platte (112) an dem Halteteil (145) Gewindebolzen (165), Muttern, die auf das freie Ende der Bolzen (165) aufgeschraubt sind, und Öffnungen (166), durch die die Gewindebolzen (165) hindurchgeführt werden, aufweisen, wobei die Bolzen (165) der Platte (112) zugehörig sind, während die Platte (112) die Öffnungen (166) aufweist.

13. Installationsgerät nach einem der Ansprüche 1 bis 12,
**dadurch gekennzeichnet, dass** jedes der Löcher (33; 163) länglich ist.

14. Installationsgerät nach einem der vorhergehenden Ansprüche,
**dadurch gekennzeichnet, dass** das Halteteil (45; 145) eine runde Form hat.

15. Installationsgerät nach einem der vorhergehenden Ansprüche,
**dadurch gekennzeichnet, dass** das Halteteil (45; 145) eine Buchse (50) aufweist, die zur Aufnahme eines Steckers bestimmt ist, und die Installationsgeräteeinrichtung (40; 140) Steckbuchsen (41) aufweist, die jeweils einen der Stifte des Steckers und den Erdungsstift (42) aufzunehmen vermögen.

16. Installationsgerät nach Anspruch 15,
**dadurch gekennzeichnet, dass** die Platte (12; 112) ferner eine der Buchse (50) des Halteteils (45; 145) gegenüberliegende aufklappbare Klappe (13; 113) aufweist.

17. Einheit mit einem Installationsgerät nach einem der vorhergehenden Ansprüche und einer Unterputzdose (3; 103) in einer Wand (4) mit einem Korpus (11; 111) aus Kunststoff, der eine Seitenwand (14) und einen eine Öffnung begrenzenden querlaufenden Rand (16) aufweist, wobei der Adapter (25; 125) mittels Installationsgeräteschrauben (28) vollständig in der Dose (3; 103) an der Seitenwand (14) montiert und im Korpus zum Rand (16) hin angeordnet ist.

18. Einheit nach Anspruch 17,
**dadurch gekennzeichnet, dass** das Halteteil (45; 145) einen in dem Korpus angeordneten ebenen Kragen (47) aufweist.

19. Einheit nach Anspruch 18,
**dadurch gekennzeichnet, dass** der Kragen (47) einen der Innenseite der Seitenwand (14) angepassten Umriss aufweist.

20. Einheit nach Anspruch 19,
**dadurch gekennzeichnet, dass** der Kragen (47) zur Öffnung hin eine Oberseite aufweist, wobei die Oberseite mit dem Rand (16) bündig ist.

21. Einheit nach einem der Ansprüche 17 bis 20,
**dadurch gekennzeichnet, dass** die Seitenwand (14) ein nach innen in den Korpus vorspringendes Stück aufweist, auf dem der Adapter (25; 125) befestigt ist.

22. Einheit nach Anspruch 21,
**dadurch gekennzeichnet, dass** das vorspringende Stück eine Vertiefung (20) der Außenseite begrenzt, in der eine Schraube (21) angeordnet ist, mit der eine Befestigungslasche (22) in Eingriff ist, die die Wand im Zusammenwirken mit dem Rand (16) des Korpus einzuklemmen vermag.
